# EUROPÄISCHE PATENTSCHRIFT

(11) **EP 0 624 561 B1**
(45) Veröffentlichungstag und Bekanntmachung des Hinweises auf die Patenterteilung: **26.06.1996**
(21) Anmeldenummer: 94106234.1
(22) Anmeldetag: 21.04.1994
(51) Int. Cl.: C04B 40/02

(54) **Verfahren zur Herstellung von dampfgehärteten Bauteilen**
Process for the production of steam-hardened building elements
Procédé pour la fabrication d'éléments de construction durcis à la vapeur

(30) Priorität: 14.05.1993 DE 4316307
(43) Veröffentlichungstag der Anmeldung: 17.11.1994
(73) Patentinhaber: YTONG AG, D-80797 München (DE)
(72) Erfinder: Hums, Dieter, Dr., D-86529 Schrobenhausen (DE); Lippe, Klaus F., D-86529 Peutenhausen (DE)
(74) Vertreter: Patentanwälte Dr. Solf & Zapf

(56) Entgegenhaltungen:
- EP-A- 0 133 239
- EP-A- 0 538 755
- US-A- 2 534 303

## Beschreibung

Die Erfindung betrifft ein Verfahren zur Herstellung von dampfgehärteten Baustoffen, insbesondere von porosiertem Calciumsilikathydrat, bei dem die Baustoffe innerhalb eines Autoklavens gehärtet und getrocknet werden.

Bei den bekannten Verfahren dieser Art wird die zum Härten der Baustoffe benötigte Energie in Form von Sattdampf den Autoklaven zugeführt. Normalerweise werden die Autoklaven evakuiert, damit kein Dampf-Luft-Gemisch entsteht, dann innerhalb 1 bis 2 Stunden mit Sattdampf auf 10 bis 20 bar aufgeheizt, nach Erreichen des Spitzenhärtedrucks in einem Zeitraum von 4 bis 12 Stunden unter Halten des Drucks und Temperatur die Härtung durchgeführt und anschließend der Autoklav in einer Zeit von einer halben Stunde bis 2 Stunden auf Umgebungsdruck entspannt. Die Baustoffe, besonders porosierte Baustoffe, enthalten nach dieser Behandlung ca. 30 M-% (Masseprozent) Überschußfeuchte. Dieser hohe Wassergehalt der autoklavgehärteten porosierten Leichtbaustoffe ist ein großer Nachteil. Er führt zu erhöhten Transportgewichten und einer erhöhten Wärmeleitfähigkeit in den ersten 2 Jahren nach Errichtung eines Gebäudes.

Es wurden schon verschiedene Verfahren vorgeschlagen, um die Härtung im Autoklaven zu optimieren und gleichzeitig Material mit einem geringeren Restfeuchtegehalt zu erreichen. In der US-PS 1 415 623 und FR-PS 2 050 780 wird z.B. vorgeschlagen, die Feuchte mittels Evakuieren zu entfernen. Diese Methode ist aber unwirtschaftlich wegen der hohen Verdampfungswärme des Wassers.

In der DE-OS 3 326 492 wird vorgeschlagen, durch weiteres Erwärmen über eine Zusatzheizung und kontinuierliches Ablassen des Dampfes unter Druckkonstanthaltung das Material zu trocknen. Dabei wird ausdrücklich eine Überhitzung des Dampfes nicht gewünscht. Wegen des geringen möglichen Wärmeübergangs auf das Material und der geringen Wärmeleitung bei porosiertem Material ist dieses Verfahren nicht wirtschaftlich. Es wird deshalb in der DE-OS 4 035 061 vorgeschlagen, die Härtung nicht bei Sattdampf sondern mit überhitztem Dampf durchzuführen. Dabei soll durch ein Ventil der Druck im Autoklav konstant gehalten werden, aber durch Einsatz einer Zusatzheizung der Dampf auf 220 bis 250°C überhitzt werden. Durch das laufende Ablassen des überschüssigen Dampfes soll das Material getrocknet werden. Dieses Verfahren hat den Nachteil, daß auch hier bei porosierten hoch wärmedämmenden Steinen die Transportvorgänge bezüglich des Wassers recht langsam sind. Besonders gravierend kann von Nachteil sein, daß durch die Überhitzung während der gesamten Behandlungszeit im Autoklav das für die Eigenschaften von Calciumsilikathydrat-Baustoffen notwendige Wasser aus den Calciumsilikathydraten teilweise entfernt wird und die Baustoffe dadurch ungünstige Eigenschaften erhalten.

Aufgabe der Erfindung ist, ein wirtschaftliches Trocknungsverfahren zu schaffen, das die Nachteile der oben beschriebenen Verfahren nicht besitzt und ein schnelles Trocknen ermöglicht.

Überraschenderweise wurde gefunden, daß die Kombination eines nur geringfügig überhitzten Dampfes mittels Druckpulsation Material mit einem Restfeuchtegehalt von 3 bis 4 M-% bei gleichzeitiger Beibehaltung der Eigenschaften von mit Sattdampf gehärteten Calciumsilikathydrat-Baustoffen ergibt. Dabei genügen Druckdifferenzen von 0,5 bis maximal 1,5 bar, eine Überhitzung von 190 auf ca. 220°C und eine Behandlungsdauer von ca. 1 Stunde für die Druckpulsation.

Nach dem erfindungsgemäßen Verfahren werden die Bauteile wie bisher in einen Autoklav eingefahren, dieser geschlossen und anschließend z.B. evakuiert, um Luft aus dem Autoklav zu entfernen. Anschließend wird der Autoklav durch Beschickung mit Sattdampf auf einen Druck von 13 bar entsprechend 190°C in 60 bis 120 Minuten aufgefahren. Nach Erreichen des maximalen Härtedrucks wird wie bisher die Neubildung der Calciumsilikathydrate unter Sattdampfatmosphäre durchgeführt. Nach etwa 2/3 der Härtezeit wird mit der Druckpulsation begonnen. Dabei wird über einen kurzen Zeitraum der Druck um 0,5 bis maximal 1,5 bar durch Ablassen von Dampf abgesenkt und anschließend durch Zufuhr von Wärmeenergie der Druck wieder aufgebaut. Dieser Vorgang kann bis zu 100 mal wiederholt werden. Die Wärmeenergie kann dem Autoklav z.B. durch eine zusätzliche interne Heizeinrichtung oder durch Ausführen des Dampfes aus dem Autoklaven und Leiten über Überhitzer und Wiedereinführen in den Autoklaven mit erhöhter Temperatur zugeführt werden. Besonders wirkungsvoll ist dieses Verfahren zur Trocknung des Materials, wenn dabei vorher der Dampf überhitzt wird. Es genügt, dabei eine Überhitzung auf ca. 220°C. Am Ende dieser Art der Behandlung verläßt das Material den Autoklaven mit einem Restfeuchtegehalt von 3 bis 4 M-%. Dieser Feuchtegehalt entspricht der sich in einem Gebäude während der Nutzungsdauer einstellenden Ausgleichsfeuchte.

Anhand der folgenden Beispiele wird die Erfindung näher erläutert.

Ein Autoklav mit einem geformten Porenbetonrohprodukt wird in 2 Stunden mit Sattdampf auf 11 bar Druck und 184°C aufgeheizt und anschließend 4 Stunden bei diesen Bedingungen die Härtung durchgeführt. Danach wird auf 220°C überhitzt und innerhalb von 2 Stunden 80 mal der Druck zwischen 11 und 10,5 bar gleichmäßig pulsiert. Dabei wird Dampf abgelassen, so daß der Druck innerhalb von 1,5 Minuten von 11 auf 10,5 bar sinkt und anschließend Wärme zugeführt, so daß der Druck von 10,5 auf 11 bar wieder aufgebaut wird. Der Druckaufbau ergibt sich aus der Dampfbildung aus der Feuchtigkeit, die dem Inneren des Porenbetonprodukts entzogen wird. Nach etwa 2 Stunden Pulsation wird der Autoklav in üblicher Weise innerhalb einer Stunde entspannt. Das Porenbetonprodukt hat nach Verlassen des Autoklaven eine Restfeuchte von weniger als 5 M-%.

Ein anderes geformtes Porenbetonprodukt wird in einen Autoklaven eingeführt, der Autoklav anschließend für 1 Stunde evakuiert und innerhalb einer weiteren Stunde mittels Sattdampf auf 11 bar Druck und 184°C aufgeheizt. Nach 4 Stunden Härtung unter Sattdampf wird auf 198°C überhitzt und innerhalb 2 Stunden 70 mal der Druck zwischen 11 und 10 bar, wie anhand des ersten Beispiels beschrieben, pulsiert. Nach 2 Stunden Pulsation wird der Autoklav in üblicher Weise innerhalb 1,5 Stunden entspannt. Das Material hat nach Verlassen des Autoklaven eine Restfeuchte von weniger als 5 M-%.

Wesentlich ist, daß die Pulsation während der normalen Härtezeit durchgeführt wird. Eine zusätzliche Zeit ist nicht erforderlich. Während der Pulsation findet die Calciumsilikathydratphasenbildung ungestört statt. Bei den bisher bekannten Verfahren zur Reduzierung der Feuchte wurde diese Phasenbildung gestört, so daß im Ergebnis minderwertige Produkte erzeugt wurden.

Die Beispiele beschreiben eine Überhitzung vor der Pulsation. Eine Überhitzung ist aber nicht erforderlich und wird dann nicht durchgeführt, wenn bestimmte Calciumsilikathydratphasen für die Härtung erzeugt werden sollen, die die Festigkeit des Endprodukts garantieren.

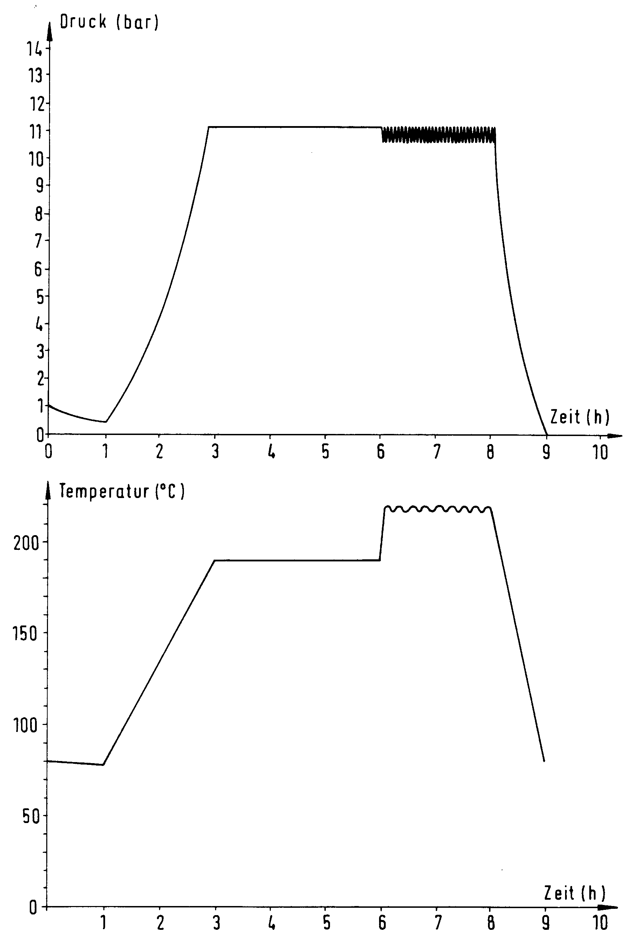

Aus der Zeichnung ist die Druck- und Temperaturführung beim ersten Beispiel erkennbar. Die Zeichnung verdeutlicht, daß die Pulsation während des Härtezyklus, der nach der dritten Stunde beginnt und nach der achten Stunde aufhört, während der letzten 2 Stunden durchgeführt wird. Die Temperaturschwankungen sind dabei relativ niedrig, so daß die Calciumsilikathydratphasenbildung nicht gestört wird. Um den Autoklaven während der Härtephase auf demselben Druckniveau zu halten, wird beim Überhitzen Dampf abgelassen, woraus resultiert, daß das Druckniveau gleich bleibt.

## Patentansprüche

1. Verfahren zum Dampfhärten von Formkörpern auf der Basis von Calciumsilikathydraten, insbesondere von Formkörpern aus dampfgehärtetem Porenbeton in einem Autoklaven, wobei nach einer Aufheizphase eine konstante Haltephase mit Sattdampfatmosphäre unter einer vorbestimmten Druck/Temperatur-Bedingung eine vorbestimmte, für die Bildung der Calciumsilikathydrate erforderliche Reaktionszeit eingestellt wird und nach der Haltephase eine Abkühlphase gefahren wird,
dadurch **gekennzeichnet,**
daß zum Austreiben von Feuchtigkeit aus den Formkörpern gegen Ende der Haltephase eine Druckpulsation durchgeführt wird.

2. Verfahren nach Anspruch 1,
dadurch **gekennzeichnet,**
daß zur Druckpulsation wiederholt kurzzeitig Dampf bis zum Erreichen eines bestimmten niedrigeren Drucks abgelassen und danach kurzzeitig Wärme zugeführt wird, bis der Ausgangsdruck wieder aufgebaut ist.

3. Verfahren nach Anspruch 2,
dadurch **gekennzeichnet,**
daß die Wärmezufuhr durch die Einbringung von überhitztem Dampf erfolgt.

4. Verfahren nach Anspruch 2,
dadurch **gekennzeichnet,**
daß zur Wärmezufuhr eine im Autoklaven angeordnete Heizeinrichtung verwendet wird.

5. Verfahren nach einem oder mehreren der Ansprüche 1 bis 4,
dadurch **gekennzeichnet,**
daß vor dem Pulsieren der Dampf im Autoklaven bis auf ein bestimmtes Temperaturniveau unter Aufrechterhaltung des Haltephasendruckes überhitzt wird und die Pulsation auf diesem Temperaturniveau durchgeführt wird.

6. Verfahren nach Anspruch 5,
dadurch **gekennzeichnet,**
daß mit Temperaturen zwischen 10 und 40°C, insbesondere zwischen 15 und 30°C, über der Sattdampftemperatur überhitzt wird.

7. Verfahren nach Anspruch 5 und/oder 6,
dadurch **gekennzeichnet,**
daß zur Konstanthaltung des Druckes Dampf abgelassen wird.

8. Verfahren nach einem oder mehreren der Ansprüche 1 bis 7,
dadurch **gekennzeichnet,**
daß die Pulsation mit einer Druckdifferenz von 0,3 bis 1,5 bar, insbesondere von 0,4 bis 0,6 bar, durchgeführt wird.

9. Verfahren nach einem oder mehreren der Ansprüche 1 bis 8,
dadurch **gekennzeichnet,**
daß mit der Druckpulsation frühestens nach der Hälfte und spätestens nach einem Dreiviertel der Reaktionszeit begonnen und bis zum Ende der Reaktionszeit bzw. Haltephase durchgeführt wird.

10. Verfahren nach einem oder mehreren der Ansprüche 1 bis 9,
dadurch **gekennzeichnet,**
daß gleichzeitig eine geringfügige Temperaturpulsation durchgeführt wird.

11. Verfahren nach Anspruch 10,
dadurch **gekennzeichnet,**
daß die Temperaturpulsation mit Temperaturdifferenzen zwischen 2 und 10°C, insbesondere zwischen 3 und 6°C, durchgeführt wird.

12. Verfahren nach einem oder mehreren der Ansprüche 1 bis 11,
dadurch **gekennzeichnet,**
daß die Druckpulsation und/oder die Temperaturpulsation mit Frequenzen zwischen 30 und 60 mal pro Stunde, insbesondere zwischen 40 und 50 mal pro Stunde, durchgeführt wird.

13. Verfahren nach einem oder mehreren der Ansprüche 1 bis 12,
dadurch **gekennzeichnet,**
daß zum Aufheizen etwa 1 Stunde evakuiert und danach innerhalb von etwa 2 Stunden aufgeheizt wird.

14. Verfahren nach Anspruch 13,
dadurch **gekennzeichnet,**
daß mit einer Haltephase einschließlich Pulsationsphase von etwa 5 Stunden gehärtet wird.

15. Verfahren nach Anspruch 14,
dadurch **gekennzeichnet,**
daß innerhalb etwa 1 Stunde abgekühlt wird.

## Claims

1. A process for steam curing shaped bodies based on calcium silicate hydrates, in particular shaped bodies of steam-cured aerated concrete in an autoclave, wherein after a heating phase a constant holding phase is established in a saturated vapour atmosphere and under a predetermined pressure/temperature condition for¹ a predetermined reaction period, necessary to form the calcium silicate hydrates, and after the holding phase a cooling phase is operated, characterized in that, towards the end of the holding phase, a pressure pulsation is performed to expel moisture from the shaped bodies.

2. A process according to Claim 1, characterized in that, for the pressure pulsation, vapour is repeatedly and briefly released until a determined lower pressure is reached, and thereafter heat is briefly supplied until the initial pressure has been re-established.

3. A process according to Claim 2, characterized in that the heat is supplied by introducing superheated vapour.

4. A process according to Claim 2, characterized in that a heating device arranged in the autoclave is used for the supply of heat.

5. A process according to one or more of Claims 1 to 4, characterized in that, before the pulsing, the vapour is superheated in the autoclave to a determined temperature level while maintaining the pressure of the holding phase and the pulsation is performed at this temperature level.

6. A process according to Claim 5, characterized in that superheating is carried out at temperatures between 10 and 40°C, in particular between 15 and 30°C, above the saturated vapour temperature.

7. A process according to Claim 5 and/or 6, characterized in that vapour is released in order to keep the pressure constant.

8. A process according to one or more of Claims 1 to 7, characterized in that the pulsation is performed using a pressure difference of 0.3 to 1.5 bar, in particular 0.4 to 0.6 bar.

9. A process according to one or more of Claims 1 to 8, characterized in that the pressure pulsation-is begun at the earliest after half, and at the latest after three quarters, of the reaction period and is performed until the end of the reaction period or holding phase.

10. A process according to one or more of Claims 1 to 9, characterized in that at the same time a slight temperature pulsation is performed.

11. A process according to Claim 10, characterized in that the temperature pulsation is performed using temperature differences of between 2 and 10°C, in particular between 3 and 6°C.

12. A process according to one or more of Claims 1 to 11, characterized in that the pressure pulsation and/or the temperature pulsation are performed using frequencies of between 30 and 60 times per hour, in particular between 40 and 50 times per hour.

13. A process according to one or more of Claims 1 to 12, characterized in that, for the heating, an evacuation is carried out for approximately 1 hour and thereafter heating is carried out within approximately 2 hours.

14. A process according to Claim 13, characterized in that curing is carried out using a holding phase, including a pulsation phase, of approximately 5 hours.

15. A process according to Claim 14, characterized in that cooling is carried out within approximately 1 hour.

## Revendications

1. Procédé pour le durcissement à la vapeur de corps façonnés à base de silicate de calcium hydraté, en particulier de corps façonnés en béton poreux durcis à la vapeur dans un autoclave, dans lequel après une phase de chauffage, on établit une phase constante de maintien dans une atmosphère de vapeur saturée, dans des conditions de pression/température préétablies, pendant un temps de réaction préétabli pour la formation du silicate de calcium hydraté, et après la phase de maintien on exécute une phase de refroidissement, caractérisé en ce que, pour extraire l'humidité hors des corps façonnés, une pulsation de la pression est réalisée vers la fin de la phase de maintien.

2. Procédé selon la revendication 1, caractérisé en ce que, pour la pulsation de la pression, de la vapeur est de manière répétée brièvement évacuée jusqu'à l'obtention d'une pression inférieure définie, et qu'ensuite de la chaleur est apportée brièvement jusqu'à ce que la pression de départ se soit à nouveau établie.

3. Procédé selon la revendication 2, caractérisé en ce que l'apport de chaleur s'effectue par l'introduction de vapeur surchauffée.

4. Procédé selon la revendication 2, caractérisé en ce que pour l'apport de chaleur, on utilise un dispositif de chauffage disposé dans l'autoclave.

5. Procédé selon l'une ou plusieurs des revendications 1 à 4, caractérisé en ce qu'avant la pulsation, la vapeur présente dans l'autoclave est surchauffée jusqu'à un niveau de température défini, en maintenant la pression de la phase de maintien, et la pulsation est effectuée à ce niveau de température.

6. Procédé selon la revendication 5, caractérisé en ce que l'on effectue la surchauffe à des températures situées entre 10 et 40°C, en particulier entre 15 et 30°C, au-dessus de la température de la vapeur saturée.

7. Procédé selon la revendication 5 et/ou 6, caractérisé en ce que pour le maintien d'une pression constante, on évacue de la vapeur.

8. Procédé selon l'une ou plusieurs des revendications 1 à 7, caractérisé en ce que la pulsation est effectuée avec une différence de pression de 0,3 à 1,5 bars, en particulier de 0,4 à 0,6 bar.

9. Procédé selon l'une ou plusieurs des revendications 1 à 8, caractérisé en ce que l'on commence la pulsation de pression au plus tôt après la moitié et au plus tard après les trois quarts du temps de réaction, et qu'elle est effectuée jusqu'à la fin du temps de réaction ou de la phase de maintien.

10. Procédé selon l'une ou plusieurs des revendications 1 à 9, caractérisé en ce que l'on effectue simultanément une légère pulsation de température.

11. Procédé selon la revendication 10, caractérisé en ce que la pulsation de température s'effectue avec des différences de température valant entre 2 et 10°C, en particulier entre 3 et 6°C.

12. Procédé selon l'une ou plusieurs des revendications 1 à 11, caractérise en ce que la pulsation de pression et/ou la pulsation de température s'effectuent à des fréquences entre 30 et 60 fois par heure, en particulier entre 40 et 50 fois par heure.

13. Procédé selon l'une ou plusieurs des revendications 1 à 12, caractérisé en ce que pour le chauffage, on dépressurise pendant environ 1 heure, et l'on chauffe ensuite en environ 2 heures.

14. Procédé selon la revendication 13, caractérise en ce que le durcissement s'effectue avec une phase de maintien d'environ 5 heures, y compris la phase de pulsation.

15. Procédé selon la revendication 14, caractérisé en ce que le refroidissement s'effectue en environ 1 heure.
